**Europäisches Patentamt**

**European Patent Office**

**Office européen des brevets**

(19)

(11) Veröffentlichungsnummer: **0 080 630**
**B1**

(12) # EUROPÄISCHE PATENTSCHRIFT

(45) Veröffentlichungstag der Patentschrift:
11.09.85

(51) Int. Cl.⁴: **B 62 L 1/10**

(21) Anmeldenummer: **82110473.4**

(22) Anmeldetag: **12.11.82**

(54) **Zweirad-Felgenbremse.**

(30) Priorität: **27.11.81 DE 3147203**
**09.09.82 DE 3233515**

(43) Veröffentlichungstag der Anmeldung:
**08.06.83 Patentblatt 83/23**

(45) Bekanntmachung des Hinweises auf die Patenterteilung:
**11.09.85 Patentblatt 85/37**

(84) Benannte Vertragsstaaten:
**AT CH DE FR GB IT LI**

(56) Entgegenhaltungen:
**DE - A - 2 655 699**
**FR - A - 381 656**
**FR - A - 895 049**
**FR - A - 934 750**

(73) Patentinhaber: **Weinmann GmbH & Co. KG Fahrrad- und Motorrad-Teilefabrik, Im Haselbusch 16, D-7700 Singen-Hohentwiel (DE)**

(72) Erfinder: **Schoch, Robert, am Steppachwiesle 39, D-7701 Hilzingen (DE)**

(74) Vertreter: **Tetzner, Volkmar, Dr.-Ing. Dr. Jur., Van-Gogh-Strasse 3, D-8000 München 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Zweirad-Felgenbremse entsprechend dem Oberbegriff des Anspruches 1.

Es ist bereits eine Zweirad-Felgenbremse bekannt (DE-A-2 655 699), bei der die Bremsbeläge von geradlinig verschiebbaren Gleitstücken getragen werden, die durch Winkelhebel betätigbar sind, die um eine quer zur Verschiebeachse des Gleitstückes verlaufende Achse schwenkbar sind. Der Raumbedarf derartiger Felgenbremsen (in Querrichtung zur Felge) ist verhältnismäßig groß.

Es ist weiterhin eine Zweirad-Felgenbremse der im Oberbegriff des Anspruches 1 vorausgesetzten Art bekannt (FR-A-895 049), bei der für die beiden Bremsbeläge eine gemeinsame drehbare Betätigungseinrichtung vorgesehen ist, die in der Längsmittelebene des Zweirades angeordnet wird und deren Drehachse in Längsrichtung des Zweirades, d. h. quer zur Verschiebeachse der beiden Bremsbeläge verläuft. Zwischen der drehbaren Betätigungseinrichtung und den Bremsteilen sind eine diametral verlaufende Kulisse, zwei Rollen, zwei geradlinig geführte Arme sowie zwei Verbindungsstangen vorgesehen.

Die Verwendung einer gemeinsamen drehbaren Betätigungseinrichtung für beide Bremsbeläge führt zwangsläufig zu langen Verbindungsgliedern.

Dadurch ergibt sich nicht nur ein unerwünscht großer Raumbedarf und eine sehr komplizierte Montage der Felgenbremse, sondern vor allem auch eine geringe Stabilität und Steifigkeit. Wegen der starken Federwirkung, mit der die bekannte Felgenbremse behaftet ist, erfordert ihre Betätigung einen verhältnismäßig großen Kraftaufwand.

Der Erfindung liegt daher die Aufgabe zugrunde, eine Felgenbremse der im Oberbegriff des Anspruches 1 vorausgesetzten Art dahin weiterzuentwickeln, daß sich bei raumsparender Bauweise und leichter Montage eine besonders wirkungsvolle Bremsfunktion ergibt (feinfühlige Betätigung bei geringem Kraftaufwand unter Vermeidung einer unerwünschten inneren Federelastizität des Bremsgestänges).

Diese Aufgabe wird erfindungsgemäß durch die kennzeichnenden Merkmale des Anspruches 1 gelöst.

Bei der erfindungsgemäßen Felgenbremse ist jedem der beiden geradlinig verschiebbaren Gleitstücke, die jeweils einen Bremsbelag tragen, ein gesondertes drehbares Betätigungselement zugeordnet. Dadurch ergibt sich die Möglichkeit, das drehbare Betätigungselement und das zugehörige Gleitstück in unmittelbarer räumlicher Nähe anzuordnen und dadurch lange Verbindungsglieder mit dem dadurch bedingten großen Raumbedarf und der ihnen innewohnenden Federelastizität zu vermeiden. Zugleich ergibt die konstruktive Vereinigung jeweils eines drehbaren Betätigungselementes und des hiervon umschlossenen verschiebbaren Gleitstückes zu einer konstruktiven Einheit die Möglichkeit einer besonders einfachen Montage und Demontage der Felgenbremse.

Bei der erfindungsgemäßen Felgenbremse fällt die Drehachse des drehbaren Betätigungselementes mit der Verschiebeachse des zugehörigen Gleitstückes zusammen. Das Betätigungselement ist ferner Teil einer Gewindebuchse, die das Gleitstück in einem Teil seiner Länge umschließt und deren Innengewinde mit einem Außengewinde des Gleitstückes in Eingriff steht.

Da außerdem das Gleitstück unverdrehbar in einem Lagergehäuse gelagert ist, ergibt eine Drehbewegung des Betätigungselementes eine geradlinige Verschiebung des Gleitstückes.

Man erreicht dadurch eine besonders feinfühlige und kraftsparende Betätigung der Bremse. Ist die Felgenbremse beispielsweise angezogen und muß sie während einer längeren Abwärtsfahrt im angezogenen Zustand gehalten werden, so genügt hierfür ein verhältnismäßig geringer Druck am Bremshebel. Der größte Teil der Bremskraft wird von dem Schraubgewinde aufgenommen, das sich zwischen dem drehbaren Betätigungselement und dem geradlinig verschiebbaren Gleitstück befindet.

Zweckmäßige Ausgestaltungen der Erfindung sind Gegenstand der Unteransprüche und werden im Zusammenhang mit der Beschreibung einiger in der Zeichnung veranschaulichter Ausführungsbeispiele erläutert. In der Zeichnung zeigt

Fig. 1 einen Schnitt durch ein erstes Ausführungsbeispiel der erfindungsgemäßen Felgenbremse;

Fig. 2 eine Seitenansicht in Richtung des Pfeiles II in der Fig. 1;

Fig. 3 eine Ansicht in Richtung des Pfeiles III in der Fig. 1;

Fig. 4 und 5 Aufsicht und Seitenansicht des zweiten Ausführungsbeispieles der Erfindung;

Fig. 6 eine Schemaansicht, die die Montage der Felgenbremse gemäß den Fig. 4 und 5 veranschaulicht;

Fig. 7 einen Schnitt (in vergrößertem Maßstab) durch die wesentlichen Teile der Felgenbremse gemäß den Fig. 4 und 5;

Fig. 8 und 9 Längsschnitt und Stirnansicht der zum Ausführungsbeispiel der Fig. 4 bis 7 gehörenden Gewindebuchse;

Fig. 10 einen Schnitt durch ein weiteres Ausführungsbeispiel.

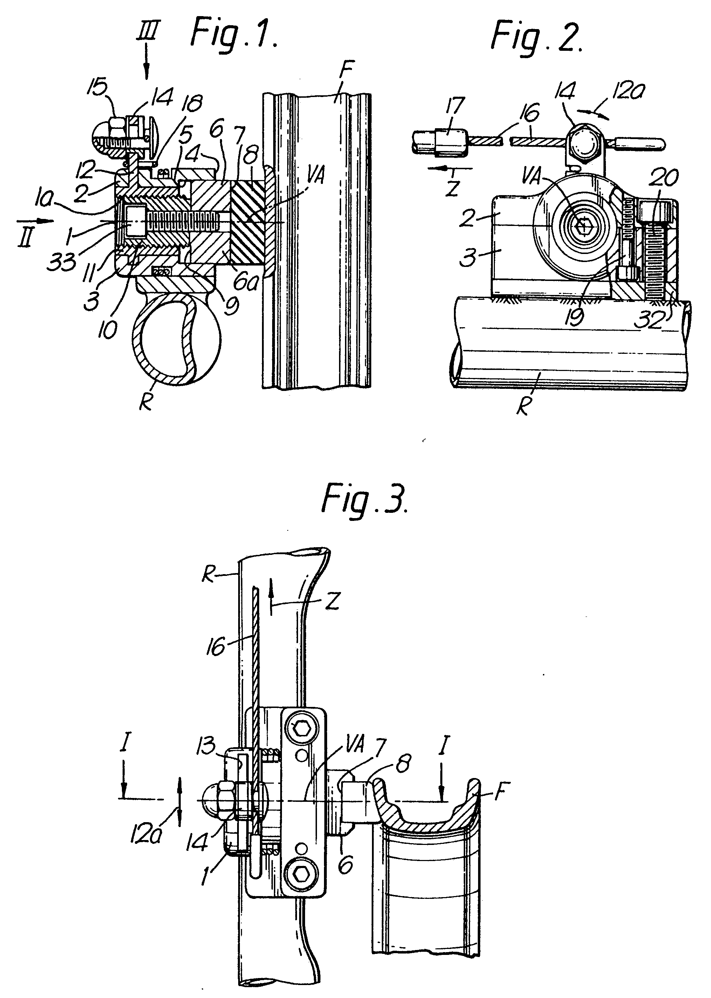

Bei dem in den Fig. 1 bis 3 veranschaulichten ersten Ausführungsbeispiel ist ein Lagergehäuse 1 an einem Rohrabschnitt R der Felge F gegenüberliegend befestigt. Bei diesem Rohrabschnitt R kann es sich sowohl um einen Schenkel der Gabel für das Vorderrad als auch um einen entsprechenden Rahmenrohrabschnitt handeln, in dem das Hinterrad eines Fahrrads angeordnet ist. Dargestellt ist lediglich die linke Hälfte der Felgenbremse, während auf der rechten Seite der Felge F eine entsprechende Bremsanordnung vorgesehen ist (in Fig. 3 lediglich durch strichpunktierte Linien angedeutet).

Das Lagergehäuse 1 enthält eine obere und untere Gehäusehälfte 2 bzw. 3, die durch Schrauben 19 miteinander verbunden sind. Das Lagergehäuse 1 ist über Schrauben 20 an einer Platte 32 befestigt, die mit dem Rohrabschnitt R verschweißt ist.

An der der Felge F zugewandten Stirnseite 4 weist das Lagergehäuse 1 eine Ausnehmung 5 auf, in der ein Gleitstück 6 quer zur Felge entlang einer Verschiebeachse VA geradlinig verschiebbar ist. Die gegen die Felge F gerichtete freie Stirnseite 7 des Gleitstückes 6 trägt einen fest mit dem Gleitstück 6 verbundenen, jedoch auswechselbaren Bremsbelag 8.

Das Gleitstück 6 ist zweiteilig ausgebildet. Ein erster Teil 6a trägt den Bremsbelag 8 und ist innerhalb der genannten Ausnehmung 5 des Lagergehäuses 1 in Richtung der Verschiebeachse VA gleitbeweglich, jedoch unverdrehbar gelagert. Zu diesem Zweck weist der erste Teil 6a des Gleitstückes 6 einen von einer Kreisfläche abweichenden, vorzugsweise quadratischen Querschnitt auf. Der Querschnitt der Ausnehmung 5 ist dem des Gleitstückteiles 6a angepaßt.

Der zweite Teil des Gleitstückes 6 wird durch eine Gewindespindel 10 mit verhältnismäßig großer Steigung gebildet. Sie schließt sich axial unmittelbar an die der Felge F abgewandte Stirnseite 9 des ersten Gleitstückteiles 6a an und ist mit diesem Gleitstückteil 6a durch eine Kerbverzahnung und eine Schraube 33 dreh- und verschiebefest verbunden. Das Außengewinde der Gewindespindel 10 steht mit dem Innengewinde einer Gewindebuchse 11 in Eingriff, deren Außenumfang im wesentlichen zylindrisch ausgestaltet und drehbar in einer zylindrischen Innenbohrung 1a des Lagergehäuses 1 gelagert ist.

Die Gewindebuchse 11 weist an ihrem äußeren Umfang ein radial verlaufendes, als Hebel ausgebildetes Betätigungselement 12 auf, das durch einen in der oberen Gehäusehälfte 2 vorgesehenen Führungsschlitz 13 hindurchgreift. Dieser Führungsschlitz 13 begrenzt die in Richtung des Doppelpfeiles 12a mögliche Schwenkbewegung des Betätigungselementes 12. Am äußeren Ende 14 des Betätigungselements 12 ist mittels einer drehbar gelagerten Schraubverbindung 15 das Zugseil 16 eines Bowdenzuges 17 festgeklemmt. Am äußeren Umfang des Lagergehäuses 1 ist eine Schraubenfeder 18 vorgesehen, deren eines Ende am Betätigungselement 12 angreift und deren anderes Ende am Lagergehäuse 1 festgelegt ist.

Bei einer Betätigung der Felgenbremse wird das Zugseil 16 in Richtung des Pfeiles Z gezogen. Dadurch wird das Betätigungselement 12 entgegen der Kraft der Schraubenfeder 18 geschwenkt. Infolgedessen wird die mit dem Betätigungselement 12 verbundene Gewindebuchse 11 in der Bohrung 1a des Lagergehäuses 1 gedreht. Da der Führungsschlitz 13 für das Betätigungselement 12 in einer rechtwinklig zur Verschiebeachse VA verlaufenden Ebene liegt, kann sich die Gewindebuchse 11 bei dieser Drehbewegung innerhalb der Bohrung 1a des Lagergehäuses 1 nicht axial verschieben. Durch die miteinander in Eingriff stehenden Gewinde der Gewindebuchse 11 und der Gewindespindel 10 ergibt sich eine schräg zur Schwenkachse des Betätigungselementes 12 verlaufende Steuerfläche. Eine Drehung der Gewindebuchse 11 hat infolgedessen eine geradlinige Verschiebung der Gewindespindel 10 und damit auch des Gleitstückteiles 6a und des von ihm getragenen Bremsbelages 8 zur Folge. Der Bremsbelag 8 kommt infolgedessen zur Anlage an die Felge F.

Wird das Zugseil 16 freigegeben, so dreht die gespannte Schraubenfeder 18 das Betätigungselement 12 im Uhrzeigersinn (Fig. 2) zurück. Die Drehbewegung der Gewindebuchse 11 hat infolgedessen eine axiale Bewegung der Gewindespindel 10 und ein Abheben des Bremsbelages 9 von der Felge F zur Folge.

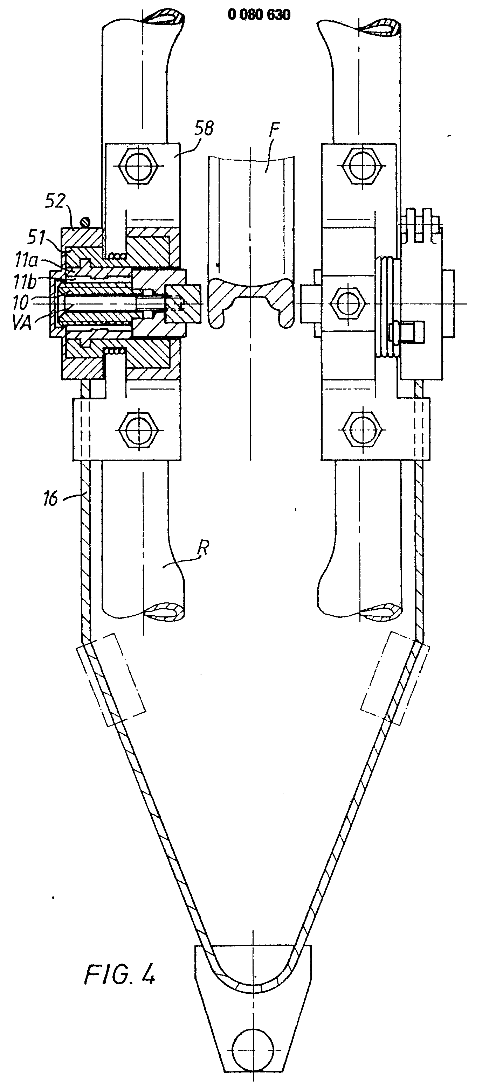

Ein weiteres bevorzugtes Ausführungsbeispiel der Erfindung ist in den Fig. 4 bis 9 veranschaulicht. Es stellt eine Abwandlung der Ausführungsform gemäß den Fig. 1 bis 3 dar. Soweit die Bauteile identisch sind, finden gleiche Bezugszeichen wie in den Fig. 1 bis 3 Verwendung. Es werden demgemäß auch nur diejenigen Merkmale näher erläutert, in denen sich das Ausführungsbeispiel der Fig. 4 bis 9 von der Anordnung nach den Fig. 1 bis 3 unterscheidet.

Die Gewindebuchse 11, die bei dem Ausführungsbeispiel der Fig. 1 bis 3 in Form eines einstückigen Metallteiles ausgebildet ist, besteht bei der Variante gemäß den Fig. 4 bis 9 aus einem das Betätigungselement 12 bildenden äußeren metallischen Teil 11a (der vorzugsweise als Fließpreßteil aus Stahl oder Buntmetall hergestellt wird) und einem eingespritzten inneren Gewindeteil 11b aus Kunststoff. Während sich nämlich ein Metallgewinde von sehr großer Steigung nur mit verhältnismäßig hohen Kosten in Serie herstellen läßt, ergibt sich für ein gespritztes Kunststoffgewinde eine sehr kostengünstige Fertigung (der äußere metallische Teil erhält hierbei zweckmäßig eine oder mehrere radiale Bohrungen zum Einspritzen des Kunststoffmateriales). Das gespritzte Kunststoffgewinde besitzt sehr gute Gleiteigenschaften (geringere Reibung als Stahl auf Stahl) und bedarf keiner Schmierung, was eine weitgehende Wartungsfreiheit der Felgenbremse ergibt.

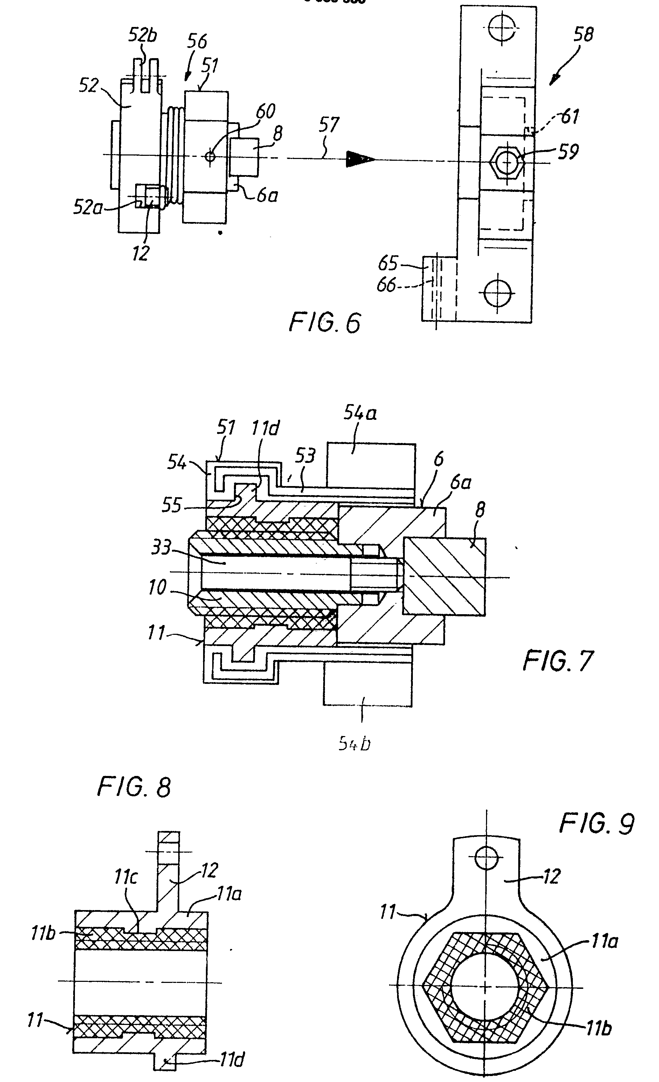

Wie insbesondere Fig. 9 erkennen läßt, besitzt der äußere metallische Teil 11a der Gewindebuchse 11 einen polygonalen (hier sechseckigen) Innenquerschnitt, der zur drehfesten Aufnahme des Kunststoff-Gewindeteiles 11b dient. Zur Sicherung des Kunststoff-Gewindeteiles 11b in axialer Richtung ist ein radial nach innen vorspringender Bund 11c am äußeren Teil 11a vorgesehen.

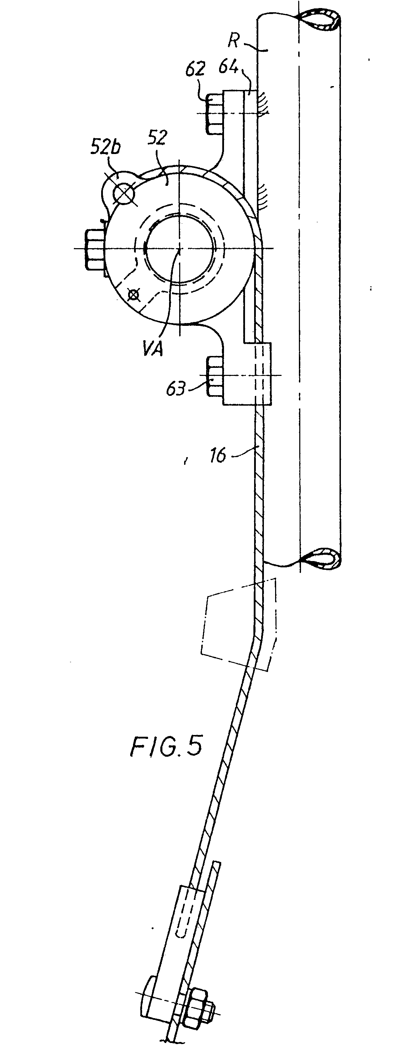

Abweichend vom Ausführungsbeispiel der Fig. 1 bis 3 ist ferner bei der Anordnung nach den Fig. 4 bis 9 das Betätigungselement 12 mit einem auf dem Lagergehäuse 51 drehbar gelagerten, zylindrischen Zwischenglied verbunden, das zugleich einen äußeren Abschlußdeckel 52 des Lagergehäuses bildet. Dieser Abschlußdeckel 52 weist eine Ausnehmung 52a auf, in die das Betätigungselement 12 eingreift. Weiterhin besitzt der Abschlußdeckel 52 eine gabelförmige Aufnahme 52b, an der das Zugseil 16 angreift. Wie insbesondere Fig. 5 erkennen läßt, ist das Zugseil 16 über einen Teil des zylindrischen Umfanges des Abschlußdeckels 52 geführt und an einer solchen Umfangsstelle (in der Aufnahme 52b) mit dem Abschlußdeckel 52 verbunden, daß während der gesamten Betätigungsbewegung der Hebelarm zwischen dem Verbindungspunkt (Aufnahme 52b) und der Drehachse (Verschiebeachse VA) konstant bleibt. Die auf diese Weise während der gesamten Betätigungsbewegung vorhandene Konstanz der Hebelübersetzung ermöglicht ein kraftsparendes und feinfühliges Betätigen der Bremse. Der Abschlußdeckel 52, der somit das Zwischenglied zwischen dem Zugseil 16 und dem Betätigungselement 12 bildet, stellt zugleich eine äußere Abdeckung der Bremse dar, die vor allem das Eindringen von Schmutz in die Bremseinheit verhindert.

Abweichend vom ersten Ausführungsbeispiel ist ferner bei der Ausführung gemäß den Fig. 4 bis 9 die Gestaltung des Lagergehäuses 51. Es enthält eine Einlage 53 aus Stahlblech, die mit Kunststoff 54 ummantelt ist. Der der Felge zugewandte Kunststoffteil ist zweckmäßig in Form von zwei Halbschalen 54a, 54b ausgebildet. Diese Gestaltung des Lagergehäuses 51 als Verbundteil aus Metall und Kunststoff gewährleistet bei sehr kostengünstiger Herstellung die notwendige Festigkeit und Stabilität.

Am inneren Umfang ist das Lagergehäuse 51 mit einer Ringnut 55 versehen, in die ein radial vorspringender Bund 11d des metallischen äußeren Teiles 11a der Gewindebuchse 11 eingreift. Hierdurch wird die notwendige axiale Verschiebesicherung der Gewindebuchse 11 im Lagergehäuse 51 gewährleistet.

Abweichend von den Fig. 1 bis 3 ist bei der Ausführung nach den Fig. 4 bis 9 schließlich die Halterung der Bremseinheit am Fahrrad. Wie insbesondere Fig. 6 erkennen läßt, ist die aus dem Lagergehäuse 51 (mit allen darin untergebrachten Teilen) und dem Abschlußdeckel 52 bestehende Baueinheit 56 als Ganzes in Richtung des Pfeiles 57 (d. h. quer zur Felge) in eine fahrradfeste Gehäuseaufnahme 58 einschiebbar und in dieser Gehäuseaufnahme mittels einer Schraube 59, deren Spitze in eine Vertiefung 60 am Umfang des Lagergehäuses 51 eingreift, arretierbar. Die Gehäuseaufnahme 58 ist zu diesem Zweck mit einem Durchbruch 61 versehen, durch den der den Bremsbelag 8 tragende Gleitstückteil 6a passend und gegen Verdrehung gesichert hindurchgreift.

Die Gehäuseaufnahme 58 läßt sich mittels Schrauben 62, 63 an einer Platte 64 befestigen, die mit dem Rohrabschnitt R verschweißt ist. Die Gehäuseaufnahme 58 weist ferner einen Ansatz 65 auf, in dem eine Führungsnut 66 für das Zugseil 16 vorgesehen ist. Auf diese Weise ist das Zugseil 16 zuverlässig längs des Umfanges des Abschlußdeckels 52 geführt und gegen seitliches Abrutschen gesichert.

Wird ein Rohrabschnitt des Fahrrads in einer der Gehäuseaufnahme 58 entsprechenden Form ausgestaltet, d. h. mit einem zum Einsetzen der Baueinheit 56 geeigneten Durchbruch versehen, so kann auf eine gesonderte Gehäuseaufnahme 58 verzichtet werden. Die erfindungsgemäße Bremse läßt sich daher als Einheit sehr leicht und einfach montieren, beispielsweise in einer mit einer entsprechenden Aussparung versehenen Vorderradgabel eines Fahrrades.

Was die Gewindesteigung der Steuerfläche anbelangt, so wird sie einerseits so groß gewählt, daß die gewünschte Schnelligkeit der Bremsbewegung gewährleistet ist, andererseits jedoch nur so groß, daß noch eine klemmfreie, feinfühlige Betätigung der Bremse möglich ist. Das Schraubgewinde kann ein- oder mehrgängig ausgeführt werden. Bei einem eingängigen Schraubgewinde ist im allgemeinen eine größere Gewindetiefe mit entsprechend stabilen Gewindeflanken zweckmäßig, während bei einem mehrgängigen Schraubgewinde eine geringere Gewindetiefe mit weniger starken Gewindeflanken ausreichend ist.

Die erfindungsgemäße Felgenbremse kann sowohl an den Schenkeln der Vorderradgabel eines Fahrrads, als auch an den entsprechenden Rohrabschnitten des Rahmens für das Hinterrad angebracht werden. Eine besonders bevorzugte Anordnungsstelle für die Bremsenteile des Hinterrades ist der unmittelbar hinter dem Tretlager befindliche, U-förmige Rahmenteil, der das Hinterrad gabelförmig umfaßt. Diese Anordnung der Hinterrad-Bremsenteile gestattet eine gleiche Anordnung und Kabelführung für Damen- und Herren-Fahrräder. Begünstigt wird diese Anbringungsstelle auch noch durch die besonders stabile Ausbildung dieses Rahmenteiles.

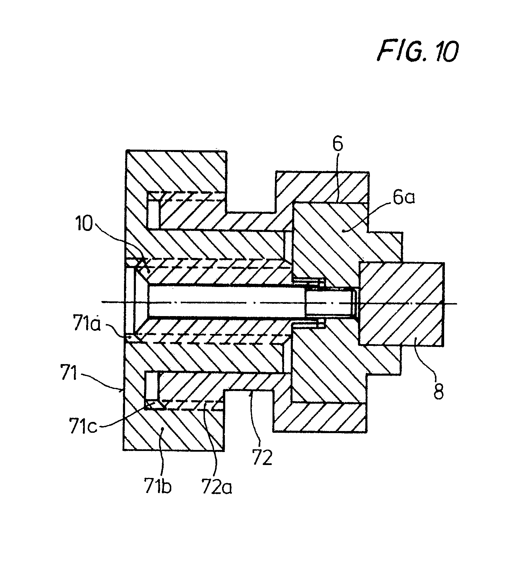

Fig. 10 zeigt schließlich ein fünftes Ausführungsbeispiel der Erfindung, das eine weitere Verbesserung der Variante gemäß den Fig. 4 bis 9 darstellt. Fig. 10 entspricht in der Schnittführung Fig. 7. Die Gewindebuchse 71 steht mit ihrem Innengewinde 71a mit der Gewindespindel 10 in Eingriff, die mit dem Gleitstückteil 6a des Gleitstückes 6 (wie bei dem zuletzt erläuterten Ausführungsbeispiel) verbunden ist. Auf ihrer der Felge abgewandten (in Fig. 10 linken) Außenseite weist die Gewindebuchse 71 einen Kragen 71b auf, der das Lagergehäuse 72 übergreift und mit einem Innengewinde 71c versehen ist, das mit einem am äußeren Umfang des Lagergehäuses 72 vorgesehenen Gewinde 72a in Eingriff steht. Das Innengewinde 71c des Kragens 71b (und demgemäß auch das korrespondierende Außengewinde 72a des Lagergehäuses 72) weist eine wesentlich kleinere Steigung als das mit der Gewindespindel 10 des Gleitstücks 6 in Eingriff stehende Innengewinde 71a auf.

Die Gewindebuchse 71 ist mit dem (nicht dargestellten) Zugseil in gleicher Weise verbunden, wie beim Ausführungsbeispiel der Fig. 4 bis 9 der Abschlußdeckel 52. Die Gewindebuchse 71 bildet hierbei somit das mit dem Zugseil verbundene Betätigungselement, über das die Verschiebung des Gleitstückes 6 bewirkt wird.

Wird die Gewindebuchse 71 durch das Zugseil gedreht, so führt sie eine geringe Axialverschiebung gegenüber dem feststehenden Lagergehäuse 72 aus. Da jedoch das Innengewinde 71a eine wesentlich größere Steigung als das Innengewinde 71c besitzt, wird bei dieser Drehbewegung der Gewindebuchse 71 die Gewindespindel 10 und damit das Gleitstück 6 mit dem Bremsbelag 8 in axialer Richtung verschoben. Die zwischen den Gewinden 71c, 72a auftretende Selbsthemmung hat für den Benutzer die vorteilhafte Wirkung, daß das Bremsen nur eine verhältnismäßig geringe Kraft erfordert, da der Benutzer nur wenig mehr als die Kraft aufzubringen hat, die zur Überwindung der Kraft der Rückführfeder erforderlich ist (ein wesentlicher Teil der bei angezogener Bremse wirkenden Bremskraft wird dagegen durch das zwischen der Gewindebuchse 71 und dem Lagergehäuse 72 vorhandene Gewinde 71c, 72a aufgenommen).

Vorteilhaft ist bei diesem Ausführungsbeispiel gemäß Fig. 10 ferner die fertigungs- und montagetechnisch besonders einfache Gestaltung der Felgenbremse. Bedingt durch die günstige und über den ganzen Umfang gleichmäßige Kraftübertragung kann die Gewindebuchse 71 einteilig aus Kunststoff hergestellt werden. Gleiches gilt für das Lagergehäuse 72.

## Patentansprüche

1. Zweirad-Felgenbremse, insbesondere für Fahrräder, enthaltend

a)    zwei auf jeder Seite der Felge (F) quer zur Felge (F) geradlinig verschiebbare Gleitstücke (6), die je einen Bremsbelag (8) tragen,

b)    eine mit einem Zugseil (16) verbundene, drehbare Betätigungseinrichtung (12), durch die bei Betätigung des Zugseiles die Gleitstücke (6) gegen Federkraft in Richtung auf die Felge (F) bewegbar sind,

c)    zwischen der Betätigungseinrichtung (12) und den Gleitstücken (6) angeordnete, schräg zur Verschiebeachse (VA) der Gleitstücke verlaufende Steuerflächen zur Umlenkung der Drehbewegung der Betätigungseinrichtung in eine geradlinige Bewegung der Gleitstücke,

gekennzeichnet durch folgende Merkmale:

d)    die beiden Gleitstücke (6) sind unverdrehbar in je einem Lagergehäuse (1) gelagert,

e)    die drehbare Betätigungseinrichtung wird durch zwei den beiden Gleitstücken (6) zugeordnete Betätigungselemente (12) gebildet, die im Lagergehäuse (1) derart angeordnet sind, daß ihre Drehachse mit der Verschiebeachse (VA) des zugehörigen Gleitstückes zusammenfällt,

f)    die Betätigungselemente (12) sind Teil einer die Gleitstücke (6) in einem Teil ihrer Länge umschließenden Gewindebuchse (11), deren Innengewinde mit einem Außengewinde des Gleitstückes (6) in Eingriff steht.

2. Felgenbremse nach Anspruch 1, dadurch gekennzeichnet, daß das Betätigungselement (12) mit einem auf dem Lagergehäuse (51) drehbar gelagerten, zylindrischen Zwischenglied (52) drehfest verbunden und das Zugseil (16) derart an diesem Zwischenglied befestigt und längs des zylindrischen Umfanges des Zwischengliedes geführt ist, daß der Hebelarm zwischen dem Verbindungspunkt (52b) und der Drehachse (VA) während der gesamten Betätigungsbewegung konstant bleibt.

3. Felgenbremse nach Anspruch 2, dadurch gekennzeichnet, daß das Zwischenglied (52) zwischen Zugseil (16) und Betätigungselement (12) zugleich einen äußeren Abschlußdeckel des Lagergehäuses (51) bildet.

4. Felgenbremse nach Anspruch 3, dadurch gekennzeichnet, daß das das Gleitstück (6) und den Abschlußdeckel (52) enthaltende Lagergehäuse (51) als Einheit (56) drehfest in eine mit einem Durchbruch (61) für das Gleitstück (6) versehene, fahrradfeste Gehäuseaufnahme (58) einschiebbar und in dieser Gehäuseaufnahme arretierbar ist.

5. Felgenbremse nach Anspruch 1, dadurch gekennzeichnet, daß die vorzugsweise einstückig aus Kunststoff hergestellte Gewindebuchse (71) auf ihrer der Felge abgewandten Außenseite einen das Lagergehäuse (72) übergreifenden, mit Innengewinde (71c) versehenen Kragen (71b) aufweist, der mit einem am äußeren Umfang des Lagergehäuses vorgesehenen Gewinde (72a) in Eingriff steht, wobei das Innengewinde (71c) des Kragens (71b) eine wesentlich kleinere Steigung als das mit dem Gleitstück (6) in Eingriff stehende Innengewinde (71a) der Gewindebuchse aufweist.

6. Felgenbremse nach Anspruch 1, dadurch gekennzeichnet, daß das Lagergehäuse (1) einen rechtwinklig zur Verschiebeachse (VA) verlaufenden Führungsschlitz (13) aufweist, durch den sich das als Hebel ausgebildete Betätigungselement (12) radial nach außen erstreckt und der die Schwenkbewegung dieses Betätigungselementes begrenzt.

7. Felgenbremse nach Anspruch 1, dadurch gekennzeichnet, daß die Gewindebuchse (11) aus einem das Betätigungselement (12) bildenden äußeren metallischen Teil (11a) und einem gespritzten Innengewindeteil (11b) aus Kunststoff besteht.

8. Felgenbremse nach Anspruch 6, dadurch gekennzeichnet, daß der äußere metallische Teil (11a) der Gewindebuchse (11) einen zur drehfesten Aufnahme des Kunststoff-Gewindeteiles (11b) dienenden, polygonalen Innenquerschnitt sowie einen zur Sicherung des Kunststoff-Gewindeteiles (11b) in axialer Richtung dienenden, radial nach innen vorspringenden Bund (11c) aufweist.

9. Felgenbremse nach Anspruch 4, dadurch gekennzeichnet, daß das Lagergehäuse (51) eine mit Kunststoff (54) ummantelte Einlage (53) aus Stahlblech enthält und am inneren Umfang mit einer Ringnut (55) versehen ist, in die ein radial vorspringender Bund (11d) der Gewindebuchse (11) zur axialen Verschiebesicherung eingreift.

## Claims

1. Two wheel rim brake, especially for bicycles, comprising

a)  two sliding members (6) provided on both sides of the rim (F) and being moveable in a straight line at right angles to the rim, each of said sliding members carrying a brake lining (8),

b)  a rotatable actuating member (12) connected with a cable (16), said sliding members (6) being moveable towards said rim (F) by actuating said cable against the action of a spring,

c)  control surfaces for transforming the rotational movement of the actuating member (12) into a straight movement of said sliding members (6), said control surfaces being provided between said actuating member (12) and said sliding members (6) inclined relative to the axis (VA) of movement of said sliding members,

characterized by the following features:

d)  each sliding member (6) is mounted non-rotatable in a bearing housing (1),

e)  said rotatable actuating member consists of two actuating elements (12), each actuating element being provided for one sliding member (6) and being mounted in the bearing housing (1) such that its axis of rotation coincides with the axis (VA) of movement of the corresponding sliding member,

f)  the actuating elements (12) are part of a threaded bush (11) enclosing the sliding members (6) in a part of their length, the internal thread of said bush (11) engaging an external thread of the sliding member (6).

2. Rim brake as claimed in claim 1, characterized in that the actuating element (12) is connected so as to be fixed against rotation to a cylindrical intermediate member (52) which is rotatably mounted on the bearing housing (51), and the cable (16) is connected to this intermediate member and guided along the cylindrical periphery of the intermediate member in such a way that during the whole actuating movement the lever arm remains constant between the connection point (52b) and the axis of rotation (VA).

3. Rim brake as claimed in claim 3, characterized in that the intermediate member (52) also forms an outer cover plate for the bearing housing (51) between the cable (16) and the actuating element (12).

4. Rim brake as claimed in claim 3, characterized in that the bearing housing (51) containing the sliding member (6) and the cover plate (52) can be pushed as a unit (56) so as to be fixed against rotation in a housing fixture (58) which is fixed on the bicycle and provided with an opening (61) for the sliding member (6) and can be retained in this housing fixture.

5. Rim Brake as claimed in claim 1, characterized in that the threaded bush (71) which is preferably made in one piece from plastic comprises a collar (71b) surrounding the bearing housing (72) and being provided with an internal thread (71c) which engages an external thread (72a) of said housing (72), the pitch of said thread (71c) of said collar (71b) being substantially less than the pitch of the thread (71a) of said threaded bush (71) engaging the sliding member (6).

6. Rim brake as claimed in claim 1, characterized in that the bearing housing (1) is provided with a guide slot (13) extending at right angles to the axis of movement (VA), the actuating element (12) formed as a lever radially extending through said guide slot (13), said guide slot (13) limiting the pivotal movement of said actuating element.

7. Rim brake as claimed in claim 1, characterized in that the threaded bush (11) consists of an outer metal part (11a) forming the actuating element (12) and an injection molded internal thread part (11b) made from plastics material.

8. Rim brake as claimed in claim 6, characterized in that the outer metal part (11a) of the threaded bush (11) has a polygonal internal cross section which serves to receive the plastic threaded part (11b) so that it is fixed against rotation and an collar (11c) which projects radially inwards and serves to secure the plastic thread part (11b) in the axial direction.

9. Rim brake as claimed in claim 4, characterized in that the bearing housing (51) contains an insert (53) made from sheet steel coated with plastic and is provided on the inner periphery with an annular groove (55) in which a radially projecting collar (11d) of the threaded bush (11) engages for axial securing against displacement.

## Revendications

1. Frein sur jante pour cycle, en particulier pour bicyclette ou cyclomoteur, comprenant:

a)  deux coulisseaux (6) à translation rectiligne et perpendiculaire à la jante (F), chacun de ces coulisseau se trouvant d'un côté de cette dernière et supportant une garniture de frein (8),

b)  un dispositif rotatif d'actionnement (12) qui est relié à un câble de traction (16) et qui, lorsque ce dernier est actionné, provoque le déplacement des coulisseaux (6) vers la jante (F) contre la force d'un ressort,

c) des surfaces de commande disposées entre le dispositif d'actionnement (12) et les coulisseaux (6), obliquement sur l'axe de translation (VA) des coulisseaux et destinées à transformer le mouvement de rotation du dispositif d'actionnement en un déplacement rectiligne des coulisseaux,

caractérisé par les particularités suivantes:

d) chacun des deux coulisseaux (6) est monté dans une cage (1) de manière qu'il lui soit interdit de tourner,

e) le dispositif rotatif d'actionnement est formé de deux éléments (12) combinés avec les deux coulisseaux (6) et montés dans la cage (1) de manière que leur axe de rotation coïncide avec l'axe de translation (VA) du coulisseau correspondant,

f) les éléments d'actionnement (12) font partie d'une douille taraudée (11) qui enveloppe les coulisseaux (6) sur une partie de leur longueur et dont le taraudage engrène avec un filetage du coulisseau (6).

2. Frein sur jante selon la revendication 1, caractérisé en ce que l'élément d'actionnement (12) est solidarisé en rotation avec un organe intermédiaire cylindrique (52) qui est monté rotatif sur la cage (51) et le câble de traction (16) est fixé à cet organe intermédiaire et guidé le long de la circonférence cylindrique de ce dernier de telle manière que le bras de levier formé entre le point de liaison (52b) et l'axe de rotation (VA) demeure constant pendant la totalité du mouvement d'actionnement.

3. Frein sur jante selon la revendication 2, caractérisé en ce que ledit organe intermédiaire (52) disposé entre le câble de traction (16) et l'élément d'actionnement (12) forme également un couvercle extérieur qui obture la cage (51).

4. Frein sur jante selon la revendication 3, caractérisé en ce que la cage (51) recevant le coulisseau (6) et le couvercle (52) s'insère sous forme de bloc fonctionnel (56) dans un logement de boîtier (58) qui est solidaire du cycle et qui comporte un passage (61) destiné au coulisseau (6), cette cage étant immobilisée en rotation et se bloquant à l'intérieur de ce logement.

5. Frein sur jante selon la revendication 1, caractérisé en ce que la douille taraudée (71), qui est de préférence en une pièce de matière plastique, comporte du côté extérieur tourné à l'opposé de la jante un collet (71b) qui passe pardessus la cage (72) et comporte un taraudage (71c) et qui engrène avec un filetage (72a) réalisé sur la circonférence extérieure de la cage, le taraudage (71c) du collet (71b) ayant un pas bien inférieur à celui du taraudage (71a) de la douille taraudée qui est en prise avec le coulisseau (6).

6. Frein sur jante selon la revendication 1, caractérisé en ce que la cage (1) comporte une fente de guidage (13) qui est perpendiculaire à l'axe de translation (VA), par laquelle passe radialement vers l'extérieur l'élément d'actionnement (12) conformé en levier et qui limite le mouvement de basculement de cet élément d'actionnement.

7. Frein sur jante selon la revendication 1, caractérisé en ce que la douille taraudée (11) se compose d'une pièce métallique extérieure (11a) qui forme l'élément d'actionnement (12) et d'une pièce taraudée (11b) réalisée par injection de matière plastique.

8. Frein sur jante selon la revendication 6, caractérisé en ce que la pièce extérieure métallique (11a) de la douille taraudée (11) a une section interne polygonale destinée à interdire de tourner dans son logement la pièce taraudée de matière plastique (11b) et comporte une collerette (11c) en saillie radialement vers l'intérieur et detinée à immobiliser la pièce taraudée de matière plastique (11b) dans la direction de l'axe.

9. Frein sur jante selon la revendication 4, caractérisé en ce que la cage (51) comprend un fourreau (53) de tôle d'acier qui est enrobé de matière plastique (54) et comporte sur la circonférence intérieure une gorge annulaire (55) dans laquelle pénètre une collerette (11d) qui est en saillie radialement et fait partie de la douille taraudée (11) afin d'en interdire toute translation axiale.

# Fig.1.

# Fig.2.

# Fig.3.

58

F

52

51

11a

11b

10

VA

16

R

*FIG. 4*

11

0 080 630

FIG. 5

13

0 080 630

FIG. 6

FIG. 7

FIG. 8

FIG. 9

15

*FIG. 10*